(19) Europäisches Patentamt / European Patent Office / Office européen des brevets

(11) **EP 3 546 618 B1**

(12) **EUROPEAN PATENT SPECIFICATION**


(45) Date of publication and mention of the grant of the patent:
**04.10.2023 Bulletin 2023/40**

(21) Application number: **18849195.5**

(22) Date of filing: **16.08.2018**

(51) International Patent Classification (IPC):
***C25B 1/46*** (2006.01) ***C25B 11/057*** (2021.01)
***C25B 11/091*** (2021.01) ***C25B 11/093*** (2021.01)

(52) Cooperative Patent Classification (CPC):
**C25B 1/46; C23C 18/04; C23C 18/12; C25B 11/057; C25B 11/091; C25B 11/093;** Y02E 60/36

(86) International application number:
**PCT/KR2018/009418**

(87) International publication number:
**WO 2019/039793 (28.02.2019 Gazette 2019/09)**


(54) **ANODE FOR ELECTROLYSIS AND MANUFACTURING METHOD THEREFOR**

ANODE FÜR ELEKTROLYSE UND HERSTELLUNGSVERFAHREN DAFÜR

ANODE POUR ÉLECTROLYSE ET SON PROCÉDÉ DE FABRICATION


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2017 KR 20170106463**
**10.08.2018 KR 20180093811**

(43) Date of publication of application:
**02.10.2019 Bulletin 2019/40**



(73) Proprietor: **LG Chem, Ltd.**
**Seoul 07336 (KR)**

(72) Inventors:
- **PARK, Hun Min**
  **Daejeon 34122 (KR)**
- **CHOI, Jung Ho**
  **Daejeon 34122 (KR)**
- **HWANG, In Sung**
  **Daejeon 34122 (KR)**
- **LEE, Dong Chul**
  **Daejeon 34122 (KR)**
- **BANG, Jung Up**
  **Daejeon34122 (KR)**

(74) Representative: **Goddar, Heinz J.**
**Boehmert & Boehmert**
**Anwaltspartnerschaft mbB**
**Pettenkoferstrasse 22**
**80336 München (DE)**



(56) References cited:

| | |
|---|---|
| **JP-A- 2008 511 755** | **KR-A- 20050 111 614** |
| **KR-A- 20070 099 667** | **KR-A- 20140 009 211** |
| **KR-A- 20170 075 528** | **US-A- 3 906 122** |
| **US-A1- 2007 261 968** | **US-A1- 2007 289 865** |



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 3 546 618 B1

## Description

### Technical Field

The present invention relates to an anode for electrolysis having reduced overvoltage and improved lifetime while exhibiting high efficiency and a method of preparing the same.

### BACKGROUND ART

Techniques for producing hydroxides, hydrogen, and chlorine by electrolysis of low-cost brine, such as sea water, are widely known, and an electrolysis process, which is also called a chlor-alkali process, can be referred to as a process that has already proven its performance and technical reliability in commercial operation for several decades.

With respect to the electrolysis of brine, an ion exchange membrane method, in which an ion exchange membrane is installed in an electrolytic bath to divide the electrolytic bath into a cation chamber and an anion chamber and brine is used as an electrolyte to obtain chlorine gas at an anode and hydrogen and caustic soda at a cathode, is currently the most widely used method.

Specifically, the electrolysis of brine is performed by reactions as shown in the following electrochemical reaction formulae.

Anodic reaction:

$$2Cl^- \rightarrow Cl_2 + 2e^- \ (E^0 = +1.36 \text{ V})$$

Cathodic reaction:

$$2H_2O + 2e^- \rightarrow 2OH^- + H_2 \ (E^0 = -0.83 \text{ V})$$

Total reaction:

$$2Cl^- + 2H_2O \rightarrow 2OH^- + Cl_2 + H_2 \ (E^\circ = -2.19 \text{ V})$$

In the electrolysis of brine, an overvoltage of the anode, an overvoltage of the cathode, a voltage due to resistance of the ion exchange membrane, and a voltage due to a distance between the anode and the cathode must be considered for an electrolytic voltage in addition to a theoretical voltage required for brine electrolysis, and the overvoltage caused by the electrode among these voltages is an important variable.

Thus, methods capable of reducing the overvoltage of the electrode have been studied, wherein, for example, a noble metal-based electrode called a DSA (Dimensionally Stable Anode) has been developed and used as the anode and development of an excellent material having durability and low overvoltage is required for the cathode.

Currently, an anode having a mixed oxide catalyst layer of ruthenium (Ru), iridium (Ir), and titanium (Ti) is the most widely used in commercial brine electrolysis, and the anode is advantageous in that it exhibits excellent chlorine generating reaction activity and stability, but there is a limitation in that it consumes a lot of energy during operation due to a high overvoltage and is limited for long-term use.

US 2007/0261968 A1 relates to an electrocatalytic coating and an electrode having the coating thereon, wherein the coating is a mixed metal oxide coating, preferably platinum group metal oxides, with or without a valve metal oxide. The electrocatalytic coating may be used as an anode component of an electrolysis cell and in particular a cell for the electrolysis of aqueous hypochlorite solutions.

US 2007/0289865 A1 discloses an electrocatalytic coating and an electrode having the coating thereon, wherein the coating is a mixed metal oxide coating, preferably platinum group metal oxides with or without a valve metal oxides, and containing a transition metal component such as palladium, rhodium or cobalt. The electrocatalytic coating may be used as an anode component of an electrolysis cell for the electrolysis of a halogen-containing solution wherein the palladium component reduces the operating potential of the anode and eliminates the necessity of a "break-in" period to obtain the lowest anode potential.

US 3,906,122 refers to a method for coating metal anodes with electroconductive paint including the provision of a cylinder with a large enough volume of paint to coat an entire continuous surface of an anode, and delivering the paint from the cylinder to the anode at a constant and non-pulsating rate by the single displacement stroke of a piston in the cylinder.

Therefore, there is a need to develop an anode having reduced overvoltage and improved lifetime as well as excellent chlorine generating reaction activity and stability in order for the anode to be easily applied to the commercial brine electrolysis.

## DISCLOSURE OF THE INVENTION

## TECHNICAL PROBLEM

An aspect of the present invention provides an anode for electrolysis obtainable by the method according to the present invention having reduced overvoltage and improved lifetime while exhibiting high efficiency.
Another aspect of the present invention provides a method of preparing the anode for electrolysis.

## TECHNICAL SOLUTION

According to claim 6 there is provided an anode for electrolysis obtainable by the method according to claim 1 including a metal base; and a catalyst layer formed on at least one surface of the metal base, wherein the catalyst layer contains ruthenium oxide, iridium oxide, palladium oxide, and titanium oxide, and, when the catalyst layer is equally divided into a plurality of pixels, a standard deviation of iridium compositions of the plurality of divided pixels is 0.35 mol% or less.
According to claim 1 there is provided a method of preparing the anode for electrolysis which includes a coating step in which a composition for forming a catalyst layer is coated on at least one surface of a metal base, dried, and heat-treated, wherein the coating is conducted by electrostatic spray deposition in which an amount of the composition for forming a catalyst layer per spray and a spray rate are respectively adjusted to be in ranges of 50 ml to 80 ml and 20 ml/min to 35 ml/min, and the composition for forming a catalyst layer includes a ruthenium oxide precursor, an iridium oxide precursor, a palladium oxide precursor, and a titanium oxide precursor.

## ADVANTAGEOUS EFFECTS

Since an anode for electrolysis according to the present invention is prepared by electrostatic spray deposition, an active material can be uniformly distributed in a catalyst layer, and thus, an overvoltage can be reduced and lifetime can be improved while exhibiting high efficiency.
Also, since a method of preparing an anode for electrolysis according to the present invention is performed by the electrostatic spray deposition when coating a metal base with a composition for forming a catalyst layer, the composition for forming a catalyst layer can be uniformly distributed on an entire surface of the metal base, and thus, an anode for electrolysis can be prepared in which the active material is uniformly distributed in the catalyst layer.
Thus, the anode for electrolysis according to the present invention and the method of preparing the same can be suitable for industries that need them, particularly, brine electrolysis.

## BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

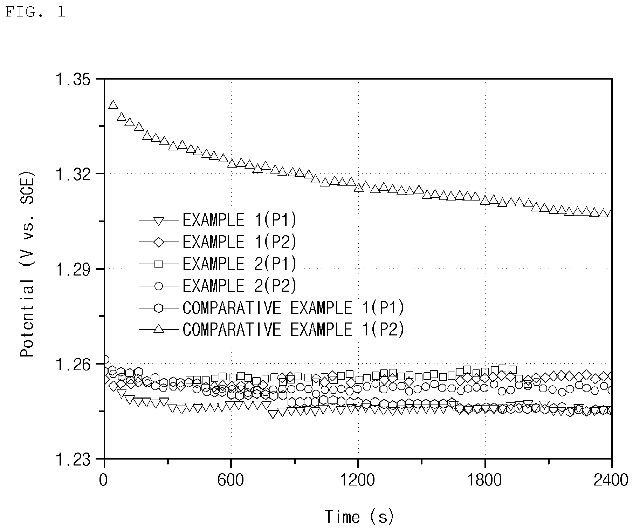

FIG. 1 is a graph showing the results of measuring a voltage of an anode according to an embodiment of the present invention by constant current chronopotentiometry.

## MODE FOR CARRYING OUT THE INVENTION

Hereinafter, the present invention will be described in more detail to allow for a clearer understanding of the present invention.
It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.
The present invention provides an anode for electrolysis obtainable by the method according to claim 1 having reduced overvoltage and improved lifetime.
The anode for electrolysis according to claim 6 includes a metal base; and a catalyst layer formed on at least one surface of the metal base, wherein the catalyst layer contains ruthenium oxide, iridium oxide, palladium oxide, and titanium oxide, and, when the catalyst layer is equally divided into a plurality of pixels, a standard deviation of iridium compositions of the plurality of divided pixels is 0.35 mol% or less.

Specifically, the anode for electrolysis has a standard deviation of iridium compositions of 0.2 mol% or less.

The standard deviation of iridium compositions in the present invention denotes uniformity of an active material in the catalyst layer, that is, a degree to which the active material is uniformly distributed in the catalyst layer, wherein the small standard deviation means that the uniformity of the active material in the catalyst layer is excellent.

The anode for electrolysis according to the present invention is prepared by the preparation method according to claim 1 which includes a coating step, in which a composition for forming a catalyst layer is coated on at least one surface of the metal base, dried, and heat-treated, wherein the coating is conducted by electrostatic spray deposition in which an amount of the composition for forming a catalyst layer per spray and a spray rate are respectively adjusted to be in ranges of 50 ml to 80 ml and 20 ml/min to 35 ml/min, and the composition for forming a catalyst layer comprises a ruthenium oxide precursor, an iridium oxide precursor, a palladium oxide precursor, and a titanium oxide precursor. Thus, with respect to the anode for electrolysis, the active material can be uniformly distributed in the catalyst layer, and, as a result, an overvoltage can be reduced and lifetime can be increased. In this case, the active material can include a mixed oxide of ruthenium oxide, iridium oxide, palladium oxide, and titanium oxide.

Herein, the anode for electrolysis is equally divided into a plurality of pixels, a mol% of iridium in each divided pixel is measured, and the standard deviation of iridium compositions is calculated from the measured values.

Specifically, the anode for electrolysis was fabricated to have a size of 1.2 m in length and 1.2 m in width (length × width = 1.2 m × 1.2 m), it was equally divided into 9 pixels, and a mol% of iridium in each pixel was then measured using an X-ray fluorescence (XRF) analyzer. Thereafter, dispersion (V(x)) was obtained by the following Equation 1 using the each iridium mol% obtained, and a standard deviation ($\sigma$) was obtained by the following Equation 2 using the dispersion.

[Equation 1]

$$V(x) = E(x^2) - [E(x)]^2$$

[Equation 2]

$$\sigma = \sqrt{V(x)}$$

In Formula 1, $E(x^2)$ represents a mean value of squared mol% of iridium in the 9 pixels, and $[E(x)]^2$ represents a squared value of mean mol% of iridium in the 9 pixels.

Also, the anode for electrolysis according to the present invention can contain 7.5 g or more of ruthenium metal per unit area ($m^2$) of the catalyst layer, and, accordingly, an anodic reaction overvoltage can be further reduced.

As described above, the catalyst layer can contain ruthenium oxide, iridium oxide, titanium oxide, and palladium oxide, and, in this case, the ruthenium oxide, the iridium oxide, the titanium oxide, and the palladium oxide can be contained in a molar ratio of 25:10:35:2 to 35:25:50:15.

Also, the catalyst layer can contain the palladium oxide in a molar ratio of 2 to 20 based on total moles of the ruthenium oxide, the iridium oxide, and the titanium oxide. Specifically, the catalyst layer can contain the palladium oxide in a molar ratio of 8 to 12 based on the total moles of the ruthenium oxide, the iridium oxide, and the titanium oxide. In a case in which the catalyst layer includes the palladium oxide in the above ratio, an overvoltage during anodic reaction of the anode for electrolysis including the same can be further reduced.

Furthermore, the anode for electrolysis the present invention may include a metal base; and a catalyst layer formed on at least one surface of the metal base, wherein the catalyst layer contains a platinum group oxide and titanium oxide, wherein the platinum group oxide includes ruthenium oxide, iridium oxide, and palladium oxide, a molar ratio of the platinum group oxide to the titanium oxide is in a range of 90:10 to 40:60, a molar ratio of the ruthenium oxide to the iridium oxide is in a range of 90:10 to 50:50, and a molar ratio of the palladium oxide to the ruthenium oxide and the iridium oxide is in a range of 5:95 to 40:60, and, when the catalyst layer is equally divided into a plurality of pixels, a standard deviation of iridium compositions of the plurality of divided pixels is 0.35 mol% or less, and the anode can be operated with high current efficiency to generate 8 g/l or more of hypochlorite.

Herein, the standard deviation of the iridium compositions is obtained by the method as described above.

The catalyst layer can further contain niobium oxide, if necessary.

The metal base can include titanium, tantalum, aluminum, hafnium, nickel, zirconium, molybdenum, tungsten, stainless steel, or an alloy thereof, and can specifically be titanium.

Also, the anode for electrolysis according to the present invention can be used as an electrolysis electrode of an aqueous solution containing chloride, particularly, an anode. Furthermore, the aqueous solution containing chloride can be an aqueous solution containing sodium chloride or potassium chloride.

Also, the anode for electrolysis according to the embodiment of the present invention can be used as an anode for preparing hypochlorite or chlorine. For example, the anode for electrolysis can generate hypochlorite or chlorine by being used as an anode for brine electrolysis.

Furthermore, the present invention provides a method of preparing the anode for electrolysis according to claim 1.

The method of preparing the anode for electrolysis according to claim 1 includes a coating step (Step A), in which a composition for forming a catalyst layer is coated on at least one surface of a metal base, dried, and heat-treated, wherein the coating is conducted by electrostatic spray deposition in which an amount of the composition for forming a catalyst layer per spray and a spray rate are respectively adjusted to be in ranges of 50 ml to 80 ml and 20 ml/min to 35 ml/min, and the composition for forming a catalyst layer includes a ruthenium oxide precursor, an iridium oxide precursor, a palladium oxide precursor, and a titanium oxide precursor.

Step A is a step for preparing an anode for electrolysis by forming a catalyst layer on at least one surface of a metal base, wherein it can be performed by coating the at least one surface of the metal base with the composition for forming a catalyst layer, drying, and performing a heat treatment.

The electrostatic spray deposition is a method in which fine coating liquid particles charged by a constant current are coated on a substrate, wherein a spray nozzle is mechanically controlled to be able to spray the composition for forming a catalyst layer on at least one surface of the metal base at a constant rate, and thus, the electrostatic spray deposition can allow the composition for forming a catalyst layer to be uniformly distributed on the metal base.

Specifically, the coating is conducted by electrostatic spray deposition, wherein the coating is conducted so that the composition for forming a catalyst layer is sprayed in an amount per spray of 50 ml to 80 ml at a rate of 20 ml/min to 35 ml/min, for example, 25 ml/min. In this case, the amount per spray is an amount required to spray both sides of the metal base once, and the coating can be performed at room temperature.

In general, an anode for electrolysis is prepared by forming a catalyst layer containing an anodic reaction active material on a metal base, and, in this case, the catalyst layer is formed by coating a composition for forming the catalyst layer containing an anodic reaction active material on the metal base, drying, and performing a heat treatment. In this case, the coating can typically be performed by doctor blading, die casting, comma coating, screen printing, spray coating, roller coating, and brushing, wherein, in this case, a uniform distribution of the active material on the metal base is difficult, the active material may not be uniformly distributed in the catalyst layer of the anode thus prepared, and, as a result, activity of the anode can be reduced or lifetime can be reduced.

However, in the preparation method according to claim 1, since the composition for forming a catalyst layer is coated on the metal base by the electrostatic spray deposition instead of the conventional method as described above, an anode can be prepared in which the active material is uniformly distributed in the catalyst layer, and, accordingly, with respect to the anode for electrolysis prepared by the method, the overvoltage can not only be reduced, but the lifetime can also be improved.

The preparation method can include a step of performing a pretreatment of the metal base before the composition for forming a catalyst layer is coated on the at least one surface of the metal base, and, in this case, the pretreatment can include the formation of irregularities on the surface of the metal base by chemical etching, blasting or thermal spraying.

Specifically, the pretreatment can be performed by blasting the surface of the metal base to form fine irregularities, performing a salt treatment, and then performing an acid treatment. For example, in an embodiment of the present invention, the pretreatment was performed in such a manner that the surface of the metal base was sandblasted with aluminum oxide to have a structure with irregularities, immersed in a 50 vol% sulfuric acid aqueous solution at 80°C for 2 hours, washed with distilled water, and then dried.

Also, the metal base is not particularly limited, but have a thickness of 50 um to 500 $\mu$m.

The composition for forming a catalyst layer may be prepared by dissolving the ruthenium oxide precursor, the iridium oxide precursor, the palladium oxide precursor, and the titanium oxide precursor in an alcohol solution.

The alcohol solution is not particularly limited, but may, for example, be n-butanol.

Herein, the ruthenium oxide precursor, the iridium oxide precursor, the palladium oxide precursor, and the titanium oxide precursor respectively represent substances that change to ruthenium oxide, iridium oxide, palladium oxide, and titanium oxide, wherein these precursors are not particularly limited, but the precursors may be those conventionally used in the art, and, for example, may include a hydrate, hydroxide, chloride, or oxide of each metal.

For example, the ruthenium oxide precursor may be ruthenium chloride hydrate ($RuCl_3 \cdot xH_2O$), the iridium oxide precursor may be iridium chloride hydrate ($IrCl_3 \cdot xH_2O$), the palladium oxide precursor may be palladium chloride or palladium chloride hydrate ($PdCl_2 \cdot xH_2O$), and the titanium oxide precursor may be titanium isopropoxide.

Also, the composition for forming a catalyst layer may further include a niobium oxide precursor, and the niobium oxide precursor represents a substance that changes to niobium oxide, wherein the niobium oxide precursor can include a hydrate, hydroxide, chloride, or oxide of niobium.

The composition for forming a catalyst layer can include each metal oxide precursor so that a composition of each metal oxide in the catalyst layer formed from the composition is within the above-described range.

The drying can be performed at 50°C to 200°C for 5 minutes to 60 minutes, and can be specifically performed at 50°C to 100°C for 5 minutes to 20 minutes.

Also, the heat treatment can be performed at 400°C to 600°C for 1 hour or less, and can be specifically performed at 450°C to 500°C for 10 minutes to 30 minutes. In a case in which the heat treatment is performed under the above-described temperature condition, it may not affect a decrease in strength of the metal base while impurities in the catalyst layer are easily removed. Furthermore, since an excessively high temperature condition is not required, energy consumption can be reduced, and thus, economic efficiency can be excellent.

The coating can be performed by sequentially repeating coating, drying, and heat-treating of the composition for forming a catalyst layer so that an amount of ruthenium metal per unit area ($m^2$) of the metal base is 7.5 g or more. That is, after the composition for forming a catalyst layer is coated on at least one surface of the metal base, dried, and heat-treated, the preparation method according to the embodiment of the present invention can be performed by repeatedly coating, drying, and heat-treating the one surface of the metal base which has been coated with the first composition for forming a catalyst layer.

Hereinafter, the present invention will be described in more detail according to examples and experimental examples. However, the following examples and experimental examples are merely presented to exemplify the present invention, and the scope of the present invention is not limited thereto.

### Example 1

After a surface of titanium was sandblasted with aluminum oxide (120 mesh) at a pressure of 0.4 MPa to yield a structure with irregularities and washed to remove oil and impurities, fine irregularities were formed on the surface by immersing the titanium in a 50 vol% sulfuric acid aqueous solution at 80°C for 2 hours, and the surface was washed with distilled water to prepare a titanium base.

Ruthenium chloride hydrate, iridium chloride hydrate, palladium chloride, and titanium isopropoxide were added to 600 ml of n-butanol and mixed to prepare a composition for forming a catalyst layer. In this case, the composition included Ru, Ir, Ti, and Pd in a molar ratio of 27:20:45:8 based on metal components.

Both surfaces of the titanium base were coated with the prepared composition for forming a catalyst layer. In this case, the coating was conducted by electrostatic spray deposition at room temperature, in which the composition for forming a catalyst layer was added to n-butanol at a dilution ratio of 1/3 (50 g/l), an amount of the composition per spray was 80 ml, and a spray rate was 25 ml/min.

After the coating, the coated titanium base was dried for 10 minutes in a convection drying oven at 70°C and was then heat-treated for 10 minutes in an electric heating furnace at 480°C. In this case, the coating, drying, and heat treatment of the composition for forming a catalyst layer were repeated until an amount of ruthenium per unit area (1 $m^2$) of the titanium base became 7.5 g. The final heat treatment was performed at 480°C for 1 hour to prepare an anode.

### Example 2

An anode was prepared in the same manner as in Example 1 except that coating of the composition for forming a catalyst layer was conducted by electrostatic spray deposition at room temperature in which a dilution ratio was 1/2 (75 g/l), an amount of the composition per spray was 50 ml, and a spray rate was 25 ml/min.

### Comparative Example 1

After a surface of titanium was sandblasted with aluminum oxide (120 mesh) at a pressure of 0.4 MPa to yield a structure with irregularities and washed to remove oil and impurities, fine irregularities were formed on the surface by immersing the titanium in a 50 vol% sulfuric acid aqueous solution at 80°C for 2 hours, and the surface was washed with distilled water to prepare a titanium base.

Ruthenium chloride hydrate, iridium chloride hydrate, palladium chloride, and titanium isopropoxide were added to 600 ml of n-butanol and mixed to prepare a composition for forming a catalyst layer. In this case, the composition included Ru, Ir, Ti, and Pd in a molar ratio of 27:20:45:8 based on metal components.

One surface of the titanium base was coated with the prepared composition for forming a catalyst layer, was dried for 10 minutes in a convection drying oven at 70°C, and was then heat-treated for 10 minutes in an electric heating furnace at 480°C. In this case, the coating, drying, and heat treatment of the composition for forming a catalyst layer were repeated until an amount of ruthenium per unit area (1 $m^2$) of the titanium base became 7.5 g, and the final heat treatment was performed at 480°C for 1 hour to prepare an anode.

**Comparative Example 2**

An anode was prepared in the same manner as in Example 1 except that coating of the composition for forming a catalyst layer was conducted by electrostatic spray deposition at room temperature in which a dilution ratio was 1/2 (75 g/l), an amount of the composition per spray was 40 ml, and a spray rate was 25 ml/min.

**Comparative Example 3**

An anode was prepared in the same manner as in Example 1 except that coating of the composition for forming a catalyst layer was conducted by electrostatic spray deposition at room temperature in which a dilution ratio was 1/3 (50 g/l), an amount of the composition per spray was 90 ml, and a spray rate was 25 ml/min.

**Experimental Example 1**

A degree of uniform distribution of metal in the catalyst layer of each anode prepared in the examples and comparative examples was comparatively analyzed, and the results thereof are presented in Table 1 below.

Specifically, each anode was fabricated to have a size of 1.2 m in length and 1.2 m in width, it was equally divided into 9 pixels, and a mol% of iridium in each pixel was then measured using an X-ray fluorescence (XRF) analyzer. Thereafter, a mean value and dispersion were obtained by using the each iridium mole% obtained, and a standard deviation was obtained by using the dispersion.

[Table 1]

| Category | The number of coating repetitions (number of times) | Mean value (mol%) | Standard deviation (mol%) |
|---|---|---|---|
| Example 1 | 11 | 5.11 | 0.31 |
| Example 2 | 9 | 4.64 | 0.191 |
| Comparative Example 1 | 12 | 4.82 | 0.48 |
| Comparative Example 2 | 12 | 4.81 | 0.40 |
| Comparative Example 3 | 9 | 4.94 | 0.51 |

As illustrated in Table 1, with respect to the anodes of Examples 1 and 2 according to the embodiment of the present invention, the standard deviations of iridium compositions in the catalyst layer were small at less than 0.35 mol%, while the standard deviation was significantly increased in Comparative Example 1.

Also, with respect to the anodes of Comparative Examples 2 and 3 in which the compositions for forming a catalyst layer were coated by electrostatic spray deposition, but the amount of the composition per spray was adjusted to be 40 ml or 90 ml, the standard deviations of iridium compositions in the catalyst layer were significantly increased in comparison to those of Examples 1 and 2.

This is a result of the fact that, with respect to Examples 1 and 2 according to the present invention, uniform catalyst layers can be formed at a faster rate by coating the compositions for forming a catalyst layer through electrostatic spray deposition and significantly more uniform catalyst layers can be formed by coating the compositions for forming a catalyst layer through electrostatic spray deposition, but by allowing each composition to be coated in a predetermined amount per spray.

**Experimental Example 2**

A voltage measurement test was performed for each anode in chlor-alkali electrolysis using a half cell to comparatively analyze performance of each anode prepared in the examples and comparative examples. In this case, samples having a size of 2 cm in length and 2 cm in width (P1) and a size of 1 cm in length and 1 cm in width (P2) were randomly sampled from two positions in each anode of the examples and comparative examples and respectively used as an anode of each half cell.

A 305 gpl (g/l) NaOH aqueous solution and 4.13 nM HCl were used as an electrolyte, a platinum (Pt) wire was used as a counter electrode, and an SCE (Saturated Calomel electrode) was used as a reference electrode. The counter electrode, the reference electrode, and each anode were put in the electrolyte, a voltage of the anode was measured at a current density of 4.4 kA/$m^2$ by constant current chronopotentiometry, and the results thereof are presented in Table 2 and FIG. 1.

[Table 2]

| Category | Anode voltage (V vs. SCE), 4.4 kA/$m^2$ | | |
|---|---|---|---|
| | P1 | P2 | Average |
| Example 1 | 1.246 | 1.256 | 1.251 |
| Example 2 | 1.257 | 1.253 | 1.255 |
| Comparative Example 1 | 1.245 | 1.312 | 1.278 |
| Comparative Example 2 | 1.247 | 1.286 | 1.267 |
| Comparative Example 3 | 1.293 | 1.250 | 1.272 |

As illustrated in Table 2 and FIG. 1, it was confirmed that average overvoltages of the anodes of Examples 1 and 2 according to the embodiment of the present invention were reduced in comparison to those of Comparative Examples 1 to 3.

Also, when a voltage difference between P1 and P2 was examined, Comparative Examples 1 to 3 had large voltage differences, but, with respect to Examples 1 and 2, the voltage differences were small and uniform.

From these results, with respect to the anodes of Examples 1 and 2 according to the present invention, the active material can be uniformly distributed in the catalyst layer, and thus, it can be confirmed that the overvoltage was reduced while exhibiting high efficiency.

**Experimental Example 3**

A degree of increase in electrolysis voltage of each anode prepared in the examples and comparative examples was measured to comparatively analyze durability (lifetime).

In this case, samples having a size of 2 cm in length and 2 cm in width (P1) and a size of 1 cm in length and 1 cm in width (P2) were randomly sampled from two positions in each anode of the examples and comparative examples and respectively used as an anode for analyzing durability.

1 M $Na_2SO_4$ was used as an electrolyte and a Pt wire was used as a counter electrode to measure voltage rise time of the anode at a current density of 40 kA/$m^2$, and the results thereof are presented in Table 3.

[Table 3]

| Category | Durability (hours) | |
|---|---|---|
| | P1 (2 × 2) | P2 (1 × 1) |
| Example 1 | 27 | 31 |
| Example 2 | 24 | 27 |
| Comparative Example 1 | 21 | 29 |
| Comparative Example 2 | 17 | 24 |
| Comparative Example 3 | 18 | 26 |

As illustrated in Table 3, it was confirmed that the anodes of Examples 1 and 2 according to the embodiment of the present invention exhibited uniform durability (lifetime), but the anodes of Comparative Examples 1 to 3 had a large difference in durability depending on the sampled positions.

From these results, with respect to the anodes of Examples 1 and 2 according to the present invention, it was confirmed that the active material can be uniformly distributed in the catalyst layer, and thus, the lifetime can be improved.

## Claims

1. A method of preparing an anode for electrolysis, the method comprising:

   a coating step in which a composition for forming a catalyst layer is coated on at least one surface of a metal base, dried, and heat-treated,
   wherein the coating is conducted by electrostatic spray deposition in which an amount of the composition for forming a catalyst layer per spray and a spray rate are respectively adjusted to be in ranges of 50 ml to 80 ml and 20 ml/min to 35 ml/min, and
   the composition for forming a catalyst layer comprises a ruthenium oxide precursor, an iridium oxide precursor, a palladium oxide precursor, and a titanium oxide precursor.

2. The method of claim 1, wherein the preparation method comprises performing a pretreatment of the metal base before the composition for forming a catalyst layer is coated,
   wherein the pretreatment comprises formation of irregularities on the surface of the metal base by chemical etching, blasting, or thermal spraying.

3. The method of claim 1, wherein the composition for forming a catalyst layer is prepared by dissolving the ruthenium oxide precursor, the iridium oxide precursor, the palladium oxide precursor, and the titanium oxide precursor in an alcohol solution.

4. The method of claim 1, wherein the coating step is performed by sequentially repeating coating, drying, and heat-treating of the composition for forming a catalyst layer so that an amount of ruthenium metal per unit area ($m^2$) of the metal base is 7.5 g or more.

5. The method of claim 1, wherein the composition for forming a catalyst layer comprises a niobium oxide precursor.

6. An anode for electrolysis obtained by the method according to any of claims 1 to 5, the anode comprising:

   a metal base; and
   a catalyst layer formed on at least one surface of the metal base,
   wherein the catalyst layer comprises ruthenium oxide, iridium oxide, palladium oxide, and titanium oxide, and when the catalyst layer is equally divided into a plurality of pixels, a standard deviation of iridium compositions of the plurality of divided pixels is 0.35 mol% or less.

7. The anode for electrolysis of claim 6, wherein the standard deviation of the iridium compositions is 0.2 mol% or less.

8. The anode for electrolysis of claim 6, wherein the catalyst layer comprises 7.5 g or more of ruthenium per unit area ($m^2$) of the catalyst layer.

9. The anode for electrolysis of claim 6, wherein the catalyst layer comprises the ruthenium oxide, the iridium oxide, the titanium oxide, and the palladium oxide in a molar ratio of 25:10:35:2 to 35:25:50:15 based on metal components.

10. The anode for electrolysis of claim 6, wherein the catalyst layer comprises the palladium oxide in a molar ratio of 2 to 20 based on total moles of the ruthenium oxide, the iridium oxide, and the titanium oxide.

11. The anode for electrolysis of claim 6, wherein the catalyst layer comprises niobium oxide.

12. The anode for electrolysis of claim 6, wherein a molar ratio of the platinum group oxide to the titanium oxide is in a range of 90:10 to 40:60,

    a molar ratio of the ruthenium oxide to the iridium oxide is in a range of 90:10 to 50:50, and
    a molar ratio of the palladium oxide to the ruthenium oxide and the iridium oxide is in a range of 5:95 to 40:60, and
    the anode is operated with high current efficiency to generate 8 g/l or more of hypochlorite.

13. The anode for electrolysis of claim 6 or 12, wherein the metal base comprises titanium, tantalum, aluminum, hafnium, nickel, zirconium, molybdenum, tungsten, stainless steel, or an alloy thereof.

## Patentansprüche

1. Verfahren zur Herstellung einer Anode für die Elektrolyse, wobei das Verfahren umfasst:

   einen Beschichtungsschritt, in dem eine Zusammensetzung zur Bildung einer Katalysatorschicht auf mindestens eine Oberfläche einer Metallbasis beschichtet, getrocknet und wärmebehandelt wird,
   wobei die Beschichtung durch elektrostatische Sprühabscheidung durchgeführt wird, bei der eine Menge der Zusammensetzung zur Bildung einer Katalysatorschicht pro Sprühung und eine Sprührate jeweils so eingestellt werden, dass sie in Bereichen von 50 ml bis 80 ml und 20 ml/min bis 35 ml/min liegen, und
   die Zusammensetzung zur Bildung einer Katalysatorschicht einen Rutheniumoxidvorläufer, einen Iridiumoxidvorläufer, einen Palladiumoxidvorläufer und einen Titanoxidvorläufer umfasst.

2. Verfahren nach Anspruch 1, bei dem das Herstellungsverfahren das Durchführen einer Vorbehandlung der Metallbasis umfasst, bevor die Zusammensetzung zur Bildung einer Katalysatorschicht beschichtet wird,
   wobei die Vorbehandlung die Bildung von Unregelmäßigkeiten auf der Oberfläche der Metallbasis durch chemisches Ätzen, Strahlen oder thermisches Sprühen umfasst.

3. Verfahren nach Anspruch 1, bei dem die Zusammensetzung zur Bildung einer Katalysatorschicht durch Auflösen des Rutheniumoxidvorläufers, des Iridiumoxidvorläufers, des Palladiumoxidvorläufers und des Titanoxidvorläufers in einer Alkohollösung hergestellt wird.

4. Verfahren nach Anspruch 1, bei dem der Beschichtungsschritt durch aufeinanderfolgendes Wiederholen des Beschichtens, Trocknens und Wärmebehandelns der Zusammensetzung zur Bildung einer Katalysatorschicht durchgeführt wird, so dass eine Menge an Rutheniummetall pro Flächeneinheit ($m^2$) der Metallbasis 7,5 g oder mehr beträgt.

5. Verfahren nach Anspruch 1, bei dem die Zusammensetzung zur Bildung einer Katalysatorschicht einen Nioboxidvorläufer umfasst.

6. Anode für die Elektrolyse, die durch das Verfahren nach einem der Ansprüche 1 bis 5 erhalten wird, wobei die Anode umfasst:

   eine Metallbasis; und
   eine Katalysatorschicht, die auf mindestens einer Oberfläche der Metallbasis gebildet ist,
   wobei die Katalysatorschicht Rutheniumoxid, Iridiumoxid, Palladiumoxid und Titanoxid umfasst, und
   wenn die Katalysatorschicht gleichmäßig in eine Mehrzahl von Pixeln unterteilt ist, eine Standardabweichung von Iridiumzusammensetzungen der Mehrzahl von unterteilten Pixeln 0,35 Mol-% oder weniger beträgt.

7. Anode für die Elektrolyse nach Anspruch 6, bei der die Standardabweichung der Iridiumzusammensetzungen 0,2 Mol-% oder weniger beträgt.

8. Anode für die Elektrolyse nach Anspruch 6, bei der die Katalysatorschicht 7,5 g oder mehr Ruthenium pro Flächeneinheit ($m^2$) der Katalysatorschicht umfasst.

9. Anode für die Elektrolyse nach Anspruch 6, bei der die Katalysatorschicht das Rutheniumoxid, das Iridiumoxid, das Titanoxid und das Palladiumoxid in einem Molverhältnis von 25:10:35:2 bis 35:25:50:15, bezogen auf Metallkomponenten, umfasst.

10. Anode für die Elektrolyse nach Anspruch 6, bei der die Katalysatorschicht das Palladiumoxid in einem Molverhältnis von 2 bis 20, bezogen auf die Gesamtmole des Rutheniumoxids, des Iridiumoxids und des Titanoxids, umfasst.

11. Anode für die Elektrolyse nach Anspruch 6, bei der die Katalysatorschicht Nioboxid umfasst.

12. Anode für die Elektrolyse nach Anspruch 6, bei der ein Molverhältnis des Platingruppenoxids zu dem Titanoxid in einem Bereich von 90:10 bis 40:60 liegt,

    ein Molverhältnis des Rutheniumoxids zu dem Iridiumoxid in einem Bereich von 90:10 bis 50:50 liegt, und
    ein Molverhältnis des Palladiumoxids zu dem Rutheniumoxid und dem Iridiumoxid in einem Bereich von 5:95 bis 40:60 liegt, und
die Anode mit hoher Stromeffizienz betrieben wird, um 8 g/l oder mehr Hypochlorit zu erzeugen.

**13.** Anode für die Elektrolyse nach Anspruch 6 oder 12, bei der die Metallbasis Titan, Tantal, Aluminium, Hafnium, Nickel, Zirkonium, Molybdän, Wolfram, Edelstahl oder eine Legierung davon umfasst.

**Revendications**

**1.** Procédé de préparation d'une anode pour une électrolyse, le procédé comprenant :

une étape de revêtement, au cours de laquelle une composition pour la constitution d'une couche de catalyseur est appliquée sur au moins une surface d'une base métallique, séchée, puis soumise à un traitement thermique, le revêtement étant effectué par dépôt par pulvérisation électrostatique, au cours de laquelle une quantité de la composition pour la constitution d'une couche de catalyseur par pulvérisation et une vitesse de pulvérisation sont ajustées respectivement de façon qu'elles soient comprises dans des plages allant de 50 ml à 80 ml et de 20ml/min à 35 ml/min, et
la composition pour la constitution d'une couche de catalyseur comprenant un précurseur d'oxyde de ruthénium, un précurseur d'oxyde d'iridium, un précurseur d'oxyde de palladium, et un précurseur d'oxyde de titane.

**2.** Procédé selon la revendication 1, le procédé de préparation comprenant l'exécution d'un prétraitement de la base métallique avant l'application de la composition pour la constitution d'une couche de catalyseur,
le prétraitement comprenant la formation d'irrégularités sur la surface de la base métallique par décapage chimique, sablage ou pulvérisation thermique.

**3.** Procédé selon la revendication 1, la composition pour la constitution d'une couche de catalyseur étant préparée en dissolvant le précurseur d'oxyde de ruthénium, le précurseur d'oxyde d'iridium, le précurseur d'oxyde de palladium, et le précurseur d'oxyde de titane dans une solution d'alcool.

**4.** Procédé selon la revendication 1, l'étape de revêtement étant effectuée en répétant de façon séquentielle le revêtement, le séchage, et le traitement thermique de la composition pour la constitution d'une couche de catalyseur, de sorte qu'une quantité de métal ruthénium par surface unitaire ($m^2$) de base métallique soit égale à 7,5 g ou davantage.

**5.** Procédé selon la revendication 1, la composition pour la constitution d'une couche de catalyseur comprenant un précurseur d'oxyde de niobium.

**6.** Anode pour électrolyse obtenue par le procédé selon une quelconque des revendications 1 à 5, l'anode comprenant :

une base métallique ; et
une couche de catalyseur constituée sur au moins une surface de la base métallique,
la couche de catalyseur comprenant de l'oxyde de ruthénium, de l'oxyde d'iridium, de l'oxyde de palladium, et de l'oxyde de titane, et
la couche de catalyseur étant divisée de façon égale en une pluralité de pixels, un écart type de compositions d'iridium de la pluralité de pixels divisés étant 0,35 % en moles ou moins.

**7.** Anode pour électrolyse selon la revendication 6, l'écart type des compositions d'iridium étant 0,2 % en moles ou moins.

**8.** Anode pour électrolyse selon la revendication 6, la couche de catalyseur comprenant 7,5 g ou davantage de ruthénium par surface unitaire ($m^2$) de la couche de catalyseur.

**9.** Anode pour électrolyse selon la revendication 6, la couche de catalyseur comprenant 7,5 g ou davantage d'oxyde de ruthénium, d'oxyde d'iridium, d'oxyde de titane et d'oxyde de palladium avec un rapport molaire de 25/10/35/2 à 35/25/50/15 sur la base de composants métalliques.

**10.** Anode pour électrolyse selon la revendication 6, la couche de catalyseur comprenant l'oxyde de palladium avec un rapport molaire de 2 à 20 sur la base d'un nombre total de moles de l'oxyde de ruthénium, de l'oxyde d'iridium, et de l'oxyde de titane.

**11.** Anode pour électrolyse selon la revendication 6, la couche de catalyseur comprenant de l'oxyde de niobium.

**12.** Anode pour électrolyse selon la revendication 6, un rapport molaire de l'oxyde du groupe platine sur l'oxyde de titane étant compris dans la plage 90/10 à 40/60,

un rapport molaire de l'oxyde de ruthénium sur l'oxyde d'iridium étant compris dans la plage 90/10 à 50/50, et
un rapport molaire de l'oxyde de palladium sur l'oxyde de ruthénium et l'oxyde d'iridium étant compris dans la plage 5/95 à 40/60, et
l'anode étant utilisée avec un haut rendement en courant afin de produire 8 g/1 ou davantage d'hypochlorite.

**13.** Anode pour électrolyse selon la revendication 6 ou 12, la base de métal comprenant du titane, du tantale, de l'aluminium, de l'hafnium, du nickel, du zircone, du molybdène, du tungstène, de l'acier inoxydable ou un alliage de ces derniers.

FIG. 1

1.35
1.32
1.29
1.26
1.23
Potential (V vs. SCE)
0
600
1200
1800
2400
Time (s)
EXAMPLE 1(P1)
EXAMPLE 1(P2)
EXAMPLE 2(P1)
EXAMPLE 2(P2)
COMPARATIVE EXAMPLE 1(P1)
COMPARATIVE EXAMPLE 1(P2)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070261968 A1
- US 20070289865 A1
- US 3906122 A